## Europäisches Patentamt
## European Patent Office
## Office européen des brevets

(19)

(11) Veröffentlichungsnummer: **0 022 500**
**B1**

(12)

# EUROPÄISCHE PATENTSCHRIFT

(45) Veröffentlichungstag der Patentschrift: **11.04.84**

(21) Anmeldenummer: **80103646.8**

(22) Anmeldetag: **27.06.80**

(51) Int. Cl.³: **E 04 B 1/68,** E 02 D 31/04, B 29 F 3/10

(54) **Verfahren und Vorrichtung zum Herstellen eines Fugenbandes für aufgehende Gebäudewände im Hoch- und Tiefbau.**

(30) Priorität: **30.06.79 DE 2926581**

(43) Veröffentlichungstag der Anmeldung:
**21.01.81 Patentblatt 81/3**

(45) Bekanntmachung des Hinweises auf die Patenterteilung:
**11.04.84 Patentblatt 84/15**

(84) Benannte Vertragsstaaten:
**BE FR IT NL**

(56) Entgegenhaltungen:
**DE - A - 1 911 621
DE - A - 1 959 204
DE - A - 2 303 008
DE - A - 2 408 514
DE - A - 2 507 154
DE - U - 1 918 401**

(73) Patentinhaber: **Besaplast Inhaber Heinz Bentler
Auf dem Stemmingholt
D-4236 Hamminkeln 3 (DE)**

(72) Erfinder: **Besaplast Inhaber Heinz Bentler
Auf dem Stemmingholt
D-4236 Hamminkeln 3 (DE)**

(74) Vertreter: **Herrmann-Trentepohl, Werner, Dipl.-Ing. et al,
Postfach 1140 Schaeferstrasse 18
D-4690 Herne 1 (DE)**

### Verfahren und Vorrichtung zum Herstellen eines Fugenbandes für aufgehende Gebäudewände im Hoch- und Tiefbau

Die Erfindung betrifft ein Verfahren zum Herstellen eines Fugenbandes für aufgehende Gebäudewände im Hoch- und Tiefbau, bei dem das ein Kunststoffprofil aufweisende Fugenband extrudiert und mit ausschließlich quer zu seiner Längserstreckung verlaufenden und im Abstand voveinander mit dem Fugenband verbundenen Bewehrungsstäben oder -bändern versehen wird.

Mit den erfindungsgemäßen Fugenbändern werden im Hoch- und Tiefbau insbesondere nacheinander in Ortbeton gegossene Bauteile, z.B. Fundament und aufgehende Wände abgedichtet. Dabei wird das Fugenband zur halben Breite in den noch nicht erhärteten Beton des Fundamentes bzw. der Gebäudewand eingebettet. Das Fugenband ist bereits bei seiner Anlieferung an die Baustelle mit seinen Bewehrungen versehen, welche dem Band eine große Festigkeit gegen Ausknicken verleihen und örtliche Deformationen des Fugenbandes vermeiden, welche die Abdichtung vereiteln.

Solche Fugenbänder sind an sich aus der DE—A—24 08 514 bekannt. Ihre Bewehrungen bestehen aus Stahldrähten mit einem gestreckten Mittelteil und zwei gekrümmten Enden. Der Mitteilteil liegt dem Kunststoffprofil des Fugenbandes außen an. Die Enden sind um die Längsränder des Bandprofiles herumgebogen und umfassen dieses klemmend. Das vorbekannte Fugenband wird in der Weise hergestellt, daß das hinter dem Extruder durch ein Wasserband geführte Fugenband in eine Heftmaschine gelangt, welche die Bewehrungsdrähte um das Band klammert. Die Bewehrungsdrähte sollen das Band von außen in Querrichtung spannen. Das erfordert bei der Herstellung des Fugenbandes einen besonderen Arbeitsgang.

Ein solches Fugenband hat an der Baustelle den Nachteil, daß die Bewehrungsdrähte hauptsächlich an einer Seite des Bandes freiliegen. Sie korrodieren deswegen leicht und rosten nach Einbettung des Bandes in den Beton weiter, sofern Korrosionsbedingungen gegeben sind, was sich nicht immer vermeiden läßt. Häufig wirkt sich auch nachteilig aus, daß bei bestimmtenAusführungsarten solcher Fugenbänder auf die richtige Orientierung der unterschiedlichen Seiten es Fugenbandes im Gebäude geachtet werden muß.

Es sind jedoch aus der DE—A—19 11 621 Fugenbänder aus extrudiertem Kunstoff bekannt, welche querverlaufende Einlagen aus Stahl oder Kunststoff aufweisen, die in das Band eingebettet sind. Diese Fugenbänder sind praktischer als die aus der DE—A—23 03 008 bekannten Fugenbänder, bei denen die Bewehrungsdrähte erste an der Baustelle durch Einstecken der abgebogenen Enden der bügelförmigen Bewehrungsdrähte in Perforationen des Fugenbandes angebracht werden. Allerdings sind bislang keine geeigneten Verfahren bekannt, nach denen querverlaufende Bewehrungsdrähte oder -bänder in extrudierte Fugenbänder eingearbeitet werden können.

Ein Verfahren zum Herstellen von strang- bzw. fließgepreßten Kunststoffprodukten ist aus der DE—A—25 07 154 bekannt. Hierbei führt man die aus zwei Extrudern austretenden Ströme in einem Y-förmigen Rohr zusammen, in das man in Verlängerung des Y-Steges die Bewehrung zwischen die längs der Y-Schenkel zusammentreffenden Kunststoffströme einführt. Dabei werden ie Bewehrungen mit den zusammentreffenden Kunstoffströmen umspritzt. Mit diesem Verfahren ist es nicht möglich, in vorgegebenen Abständen voneinander angeordnete Bewehrungsstäße oder -bänder gemäß der vorbekannten Ausbildung des Fugenbandes einzubetten. Tatsächlich werden, soweit nach dem vorbekannten Verfahren bandförmige Erzeugnisse hergestellt werden sollen, diese auch nur mit durchgehenden, d.h. auch in Bandlängsrichtung verlaufenden Bewehrungen versehen. Solche Fugenbänder sind aus der DE—A—19 59 204 zwar ebenfalls bekannt, erfordern jedoch eine entsprechend breite Mittelbewehrung, die eine geringe Steifigkeit gegen Ausknicken des Bandes liefert und entsprechend geringere Rückstellkräfte zur Folge hat.

Der Erfindung liegt die Aufgabe zugrunde, ein zur Herstellung eines Fugenbandes der eingangs als bekannt vorausgesetzten Art geeignetes Verfahren zu schaffen, welches einerseits für das Einarbeiten der Bewehrung keinen besonderen Arbeitsgang voraussetzt und andererseits die Einhaltung der den Bewehrungsstäben bzw. -drähten vorgegebenen Abstände in dem Fugenband ermöglicht.

Gemäß der Erfindung wird diese Aufgabe dadurch gelöst, daß ein aus einer Breitschlitzdüse austretender Strom zunächst symmetrisch zur Stromdicke geteilt, anschließend die Bewehrungsstäbe oder -bänder einzeln in einer mit der Extrudiergeschwindigkeit synchronisierten Taktfolge quer zur Bandlänge und Transportrichtung der Teilstränge zwischen diese eingeführt und danach die Teilstränge hinter jeder eingeführten Bewehrung mit Hilfe eines Vakuums zusammengeführt und zu einer Einheit verschmolzen werden, in der die Bewehrungen auf ihrer ganzen Länge unter Umschließung ihrer Enden eingebettet sind.

Die nach diesem Verfahren und unter Verwendung von aus Federstahl bestehenden Stahlbändern hergestellte Fugenbänder haben den erheblichen Vorteil, daß sie beim Einrütteln des Betons selbst vibrieren und auf diese Weise eine bessere Verteilung des Betons um das Band gewährleisten. Da solche Bänder und ähnlich geformte Bewehrungen eine bevorzugte Stellung auf Auflagen einnehmen bzw.

die erfindungsgemäß auch angewandten Drähte beliebig um ihre Längsachse gedreht sein können, bieten solche Bewehrungen die Voraussetzung für ein mit dem Extrudieren des Bandes synchrones Einbetten der Bewehrungen. Dabei werden die Bewehrungen mit dem Kunststoff umgeben, der den Zutritt von korrodierenden Sphären ausschließt. Das Band zeigt daher äußerlich nur Kunststoffoberflächen, welche praktisch gegen chemische und mechanische Einflüsse unempfindlich sind.

Das nach dem erfindungsgemäßen Verfahren hergestellte Fugenband weist örtlich verdickte Teillängen auf, in denen jeweils ein Bewehrungselement angeordnet ist und das Profil symmetrisch zu jedem Bewehrungselement verläuft. Daher ist die Masse in den verdickten und in den normalen Teillängen des Fugenbandes konstant. Damit ist auch die extrudierte Menge unabhängig von der Anzahl der eingebetteten Bewehrungselemente konstant. Das schafft vereinfachte Bedingungen dafür, daß örtlich freiliegende Bereiche der Bewehrung nicht auftreten können.

Wenn man wie üblich das Fugenbandprofil an den Bandkanten mit einer vergrößerten Dicke versieht, läßt sich verhindern, daß die auf ihrer ganzen Länge umschlossenen Bewehrungen mit ihren Enden durch das Kinststoffmaterial nach außen gedrückt werden.

Eine Vorrichtung zur Durchführung des Verfahrens ist in dem Anspruch 2 gekennzeichnet.

Eine bevorzugte Ausführungsform des nach dem erfindungsgemäßen Verfahren hergestellten Fugenbandes sowie eine Vorrichtung, nach der ein solches Fugenband hergestellt werden kann, ist in den Figuren der Zeichnung wiedergegeben.

Figur 1 zeigt perspektivisch eine Teillänge eines Fugenbandes gemäß der Erfindung,

Figure 2 perspektivisch den Teil einer für die Herstellung eines Fugenbandes nach Figur 1 vorbereiteten Extrudermaschine und

Figur 3 einen Schnitt längs der Linie III—III der Figur 2.

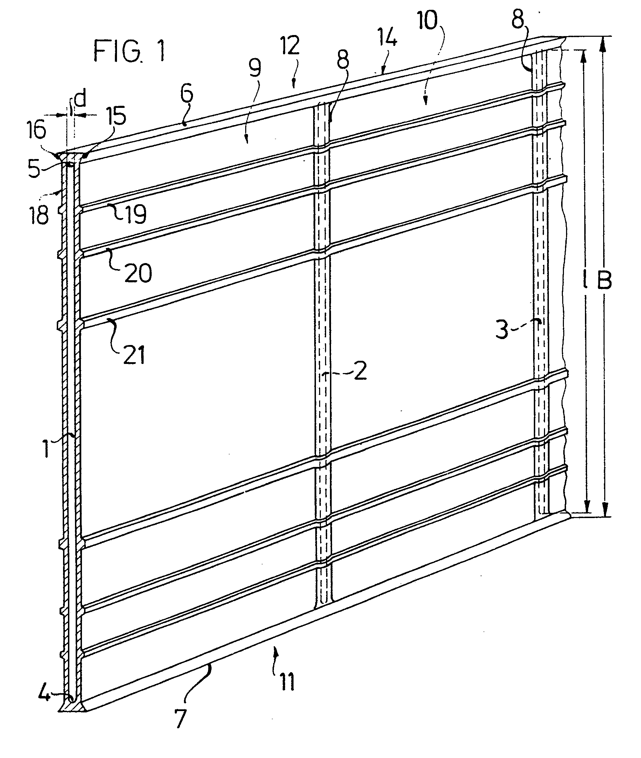

Die in Figur 1 wiedergegebene Teillänge eines Fugenbandes erstreckt sich über den Abstand von drei Stahldrähten 1, 2 und 3, welche das Fugenband in Querrichtung versteifen. Ein solches Fugenband wird zur halben Breite in den noch nicht erhärteten Beton einer Gebäudewand eingebettet und dichtet dann zusammen mit seiner anderen Hälfte die Fuge, die zwischen der Gebäudewand und einem Fundament entstanden ist. Die Drähte 1 bis 3 bestehen jeweils aus geraden Längen, so daß ihre Enden 4 bzw. 5 den Schmalseiten 6 bzw. 7 des Fugenbandes gegenüberstehen. Die gesamte Länge der Drähte 1 bis 3 ist in das Fugenband eingebettet. Das Profil des Fugenbandes umschließt dadurch den jeweiligen Draht einschließlich seiner beiden Enden 4, 5.

Äußerlich weist das Fugenband örtlich verdickte Teillängen auf, von denen zwei bei 8 angedeutet sind. Sie markieren den Ort, in dem sich der Draht 2 befindet. Wie sich aus der Profildarstellung ergibt, ist im Bereich der örtlichen Verdickung das Kunststoffprofil symmetrisch zum Draht angeordnet, d.h. in den örtlichen Verdickungen 8 ist die Masse des Kunststoffes die gleiche wie in den dazwischenliegenden Teillängen 9 bzw. 10 bezogen auf die gleiche Bandlängserstreckung. Im übrigen sind gemäß dem dargestellten Ausführungsbeispiel die Drähte 1 bis 3 kürzer als die Bandbreite, d.h. die Drahtlänge l ist geringer als die Bandbreite B.

Ferner ist gemäß dem dargestellten Ausführungsbeispiel das Profil d des Fugenbandes, d.h. des Kunststoffes in Querrichtung des Fugenbandes im allgemeien konstant. Es gibt jedoch örtliche Bereiche, in denen die Dicke vergrößert ist. Dazu gehören die beiden Verstärkungen an den Längsrändern 11, 12 des Fugenbandes, welche infolge der Symmetrie des Fugenbandes zur Längs- und Querachse einander gleich sind und die Form von gleichschenkligen Dreiecken aufweisen. Die Basis dieses Dreiecks wird von der dem betreffenden Band 11, 12 des Bandes zugeordneten Profilschmalseite 6 gebildet, und die beiden Seiten 15, 16 stellen Übergänge in einen an den betreffenden Rand 12 anschließenden Profilabschnitt 18 dar, der von verminderter Wandstärke ist. Dieser Profilabschnitt ist jedoch örtlich um die Querschnitte von Längsrippen 19 bis 21 verstärkt.

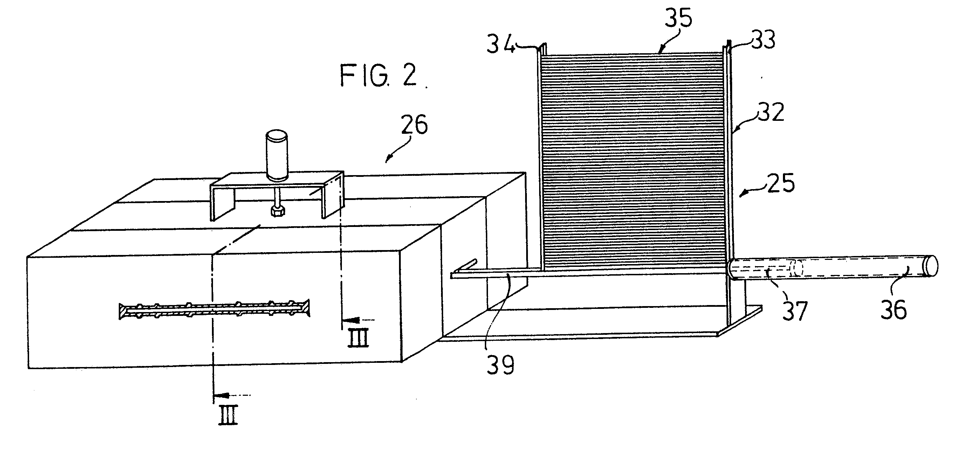

Das beschriebene Fugenband läßt sich auf einem Extruder herstellen, der als solcher nicht dargestellt ist, aber beispielsweise eine Schnecke zum Plastifizieren und Mastifizieren des Kunststoffes aufweist, aus dem das Fugenband besteht. Figure 2 läßt lediglich das Werkzeug erkenne, das zur Herstellung des Bandprofiles dient und eine Zusatzvorrichtung 25 aufweist, die mit dem Werkzeug 26 zusammenwirkt, um die Drähte 1 bis 3 im vorgegebenen Abstand in das Fugenband einzubringen.

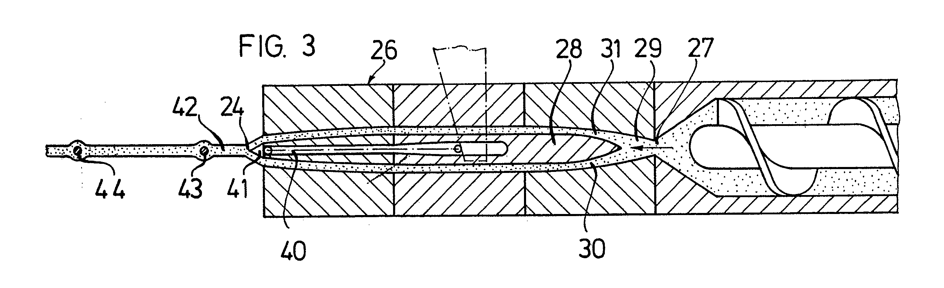

Wie die Schnittdarstellung der Figur 3 erkennen läßt, wird der plastifizierte und mastifizierte Kunstoff mit einer Breitschlitzdüse 27 geformt, eheer in das Werkzeug 26 eintritt. Das Werkzeug enthält einen torpedoartigen Trennkörper 28, der den aus der Breitschlitzdüse 27 austretenden Kunststoffstrom 29 symmetrisch in zwei Hälften 30 und 31 aufteilt. Die beiden Hälften werden hinter dem Werkzeug 26 bei 24 wieder zusammengeführt.

Neben dem Werkzeug befindet sich wie Figur 2 zeigt, ein Magazin 32, das im wesentlichen aus zwei U-förmigen Führungen 33, 34 besteht, welche die einzelnen Drahtlängen 35 führen, die übereinandergestapelt sind. Am unteren Ende des Magazins 32 liegt ein Druckmittelzylinder 36, dessen Kolbenstange 37 auf die Stirnseite eines vor ihm liegenden Drahtes einwirkt und diesen über eine Führung 39 in das Werkzeug 26 drückt. Der Draht gelangt dadurch in eine Längsführung 40 (Figur 3), aus der er bei 41 austritt und zwischen die beiden Hälften 30 und 31 des Kunststoffstromes gelangt. Da sich die Hälften hinter dem Werkstück selbsttätig zusammenziehen und infolge der noch plastischen Eigenschaft des Kunststoffes wieder zu einer Einheit bei 42 verschmelzen, liegen die Drähte, wie bei 43 und 44 in Figur 3 dargestellt, in vorgegebenen Abständen enigebettet im Fugenband, sofern man die Taktfolge des Zylinders 36 mit der Extrudergeschwindigkeit entsprechend synchronisiert. Das geschieht durch eine im einzelnen nicht dargestellte Steuerung.

**Patentansprüche**

1. Verfahren zum Herstellen eines Fugenbandes (4 bis 21) für aufgehende Gebäudewände im Hoch- und Tiefbau, bei dem das ein Kunststoffprofil (6, 8, 11, 12, 15, 16, 18, 19, 20, 21) aufweisende Fugenband (4 bis 21) durch Extrudieren hergestellt und mit ausschließlich quer zu seiner Längserstreckung verlaufenden und im Abstand voneinander mit dem Fugenband (4 bis 21) verbundenen Bewehrungsstäben oder -bändern (1 bis 3; 4, 5) versehen wird, dadurch gekennzeichnet, daß ein aus einer Breitschlitzdüse (27) austretender Strom (29) zunächst symmetrisch zur Stromdicke geteilt, anschließend die Bewehrungsstäbe oder -bänder (1 bis 3; 4, 5) einzeln in einer mit der Extrudiergeschwindigkeit synchronisierten Taktfolge quer zur Bandlänge und zur Transportrichtung der Teilstränge (30, 31) zwischen diese eingeführt und danach die Teilstränge (30, 31) hinter jeder eingeführten Bewehrung (1 bis 3; 4, 5) mit Hilfe eines Vakuums zusammengeführt und zu einer Einheit (42) verschmolzen werden, in der die Bewehrungen (1 bis 3; 4, 5) auf ihrer ganzen Länge unter Umschließung ihrer Enden (4, 5) eingebettet sind.

2. Vorrichtung zur Durchführung des Verfahrens nach Anspruch 1, gekennzeichnet durch einen zum Aufteilen des aus der Breitschlitzdüse (27) austretenden Stranges (29) dienenden torpedoartigen Körpers (28), der eine Führung (40) für die eingeführten Bewehrungen (1 bis 3; 4, 5) zwischen die Teilstränge (30, 31) aufweist und durch ein neben dem Extrudierwerkzeug (26) angeordnetes Magazin (32), das eine Führung (33, 34) für die übereinander angeordneten Bewehrungen und einen darunter angeordneten druckmittelbetätigten Zylinder (36) aufweist, der zum Einschieben der Bewehrungen über eine Führung (39) in das Extrudierwerkzeug (26) dient.

**Revendications**

1. Procédé de fabrication d'une bande d'étanchéité (4 à 21) pour murs de construction dans le domaine du génie civil, selon lequel la bande d'étanchéité, qui est constituée par un profilé en matière synthétique (6, 8, 11, 12, 15, 16, 18, 19, 20, 21) est extrudée et est munie de barres ou de bandes d'armuture disposées exclusivement transversalement par rapport à son orientation longitudinale et sont reliées à la bande d'étanchéité (4 à 21) à une certaine distance les unes des autres, caractérisé en ce que le courant (29) qui sort d'une buse (27) à large fente est d'abord subdivisé symétriquement dans le sens de l'épaisseur de courant, en ce qu'ensuite les barres ou les bandes d'armature (1 à 3; 4, 5) sont introduites entre ces derniers individuellement et transversalement à la longueur de la bande dans la direction d'avance des extrudats partiels (30, 31) de cette bande selon une séquence rythmée et synchronisée avec la vitesse d'extrusion, et en ce qu'ensuite les extrudats partiels (30, 31) sont rassemblés à l'arrière de chacun des éléments d'armature (1 à 3; 4, 5) qui sont insérés par création d'une dépression et fusionnés en un ensemble (42) dans lequel sont noyés les éléments d'armature (1 à 3; 4, 5) sur toute leur longueur et qui entoure leurs extrémités (4, 5).

2. Dispositif pour la mise en oeuvre du procédé selon la revendication 1, caractérisé par un corps (28) en forme de torpille servant à subdiviser l'extrudat qui sort de la buse (27) à large fente, corps comprenant un guide (40) pour les éléments d'armature (1 à 3; 4, 5) insérés entre les extrudats partiels (30, 31), et par un magasin (32) monté contre l'outil (26) de l'extrudeuse, lequel comprend un dispositif de guidage (33, 34) pour les éléments d'armature disposées les uns au -dessus des autres et un vérin (36) actionné par un fluide sous pression et disposé en dessous, qui sert à insérer les éléments d'armature dans l'outil (26) de l'extrudeuse par l'intermédiaire d'un guide (39).

**Claims**

1. Method for the production of a water-stop strip (4 to 21) for building walls in structural and civil engineering, in which a water-stop strip (4 to 21) comprising a plastics profile (6, 8, 11, 12, 15, 16, 18, 19, 20, 21) is produced from extrusions, and is provided with reinforcement rods or strips (1 to 3; 4, 5) connected to the water-stop strip (4 to 21) which run solely at right angles to its length and at spaced intervals, characterised in that the flow from a fishtail die (27) is firstly symmetrically divided in thickness, thereafter the reinforcement rods or strips (1 to 3; 4, 5) are introduced between the layers singly, in periodic sequence with the speed of extrusion, and at right-angles to the length of the strip and to the direction of movement of the layers (30, 31), and then the layers (30, 31) are brought together behind each introduced reinforcement (1 to 3; 4, 5) with the help of a vacuum, and are merged into one body (42) in which the reinforcements (1 to 3; 4, 5) are embedded throughout their entire length by enclosing their ends (4, 5).

2. Apparatus for carrying out of the method according to claim 1, characterised in that a torpedo-section body (28) serves to divide the extrusion (29) from the fishtail die (27), which has a guide (40) for the introduced reinforcements (1 to 3; 4, 5) between the layers (30, 31) and by a magazine (32) arranged next to the extrusion device (26) which has a guide (33, 34) for the reinforcements arranged one on top of the other, and a pressure cylinder (36) arranged underneath, which serves to insert the reinforcements over a guide (39) into the extrusion device (26).

FIG. 1

FIG. 2.

FIG. 3